# EUROPEAN PATENT SPECIFICATION

(11) **EP 1 459 272 B1**
(45) Date of publication and mention of the grant of the patent: **27.09.2006**
(21) Application number: 02781560.4
(22) Date of filing: 20.11.2002
(51) Int. Cl.: G08B 13/194

(54) **A SURVEILLANCE SYSTEM WITH SUSPICIOUS BEHAVIOUR DETECTION**
ÜBERWACHUNGSSYSTEM MIT VERDÄCHTIGEM VERHALTENSDETEKTION
SYSTEME DE SURVEILLANCE AVEC DETECTION DE COMPORTEMENT SUSPECT

(30) Priority: 11.12.2001 US 14228
(43) Date of publication of application: 22.09.2004
(73) Proprietor: Koninklijke Philips Electronics N.V., 5621 BA Eindhoven (NL)
(72) Inventor: COLMENAREZ, Antonio, NL-5656 AA Eindhoven (NL); TRAJKOVIC, Miroslav, NL-5656 AA Eindhoven (NL); GUTTA, Srinivas, V., R., NL-5656 AA Eindhoven (NL)
(74) Representative: Groenendaal, Antonius W. M.
(86) International application number: PCT/IB2002/004868
(87) International publication number: WO 2003/050777

(56) References cited:
- WO-A-98/08208
- US-A- 4 737 847
- US-A- 6 128 396

## Description

The present invention relates to security systems. More particularly, the present invention relates to surveillance systems.

Conventional security and surveillance systems are based on limited event detection. For example, opening of doors windows, motion sensors on detecting intrusion of a premises, are common checkpoints for such security systems. At best, conventional system might use computer vision algorithms to detect motion or sound.

An abnormality supervising system for obtaining a pictorial input, for detecting abnormality in this input on the basis of the preliminary stored information, and for notifying the security upon detecting presence of an abnormality is disclosed in US 4737847. This system notifies the security whenever a predefined abnormality is detected and indicates a zone, in space and/or in time, in which an abnormality occurred, using a warning level indicator. US 6128396 discloses another automatic monitoring apparatus for detecting an object, such as a suspicious person, based on the picture obtained from an image pickup device.

However, there is a need in the art for a security capable of the automatic detection of suspicious events (as well known in the surveillance community) and triggering of warning signals, etc.

The present invention provides systems according to claims 1, 8 and 9 and methods according to claims 12, 13 and 14 providing automatic detection of suspicious behavioral patterns and triggering a warning system.
Fig. 1 illustrates an overview an embodiment of a system according to the present invention.
Fig. 2 provides details regarding the pattern recognition module shown in Fig. 1.
Fig. 3 is a flowchart providing an overview of a method according to the present invention.
Fig. 4 provides an optional step for the method shown in Fig. 3.

By way of illustration and not limitation, the following figures provide and their associated description provide an explanation of certain aspects of a system and method according to the present invention. It is understood by persons of ordinary skill in the art that there are variations to the illustrated system and method which are within the scope of the appended claims, and as such the invention is not limited to the illustrations provided for explanatory purposes.

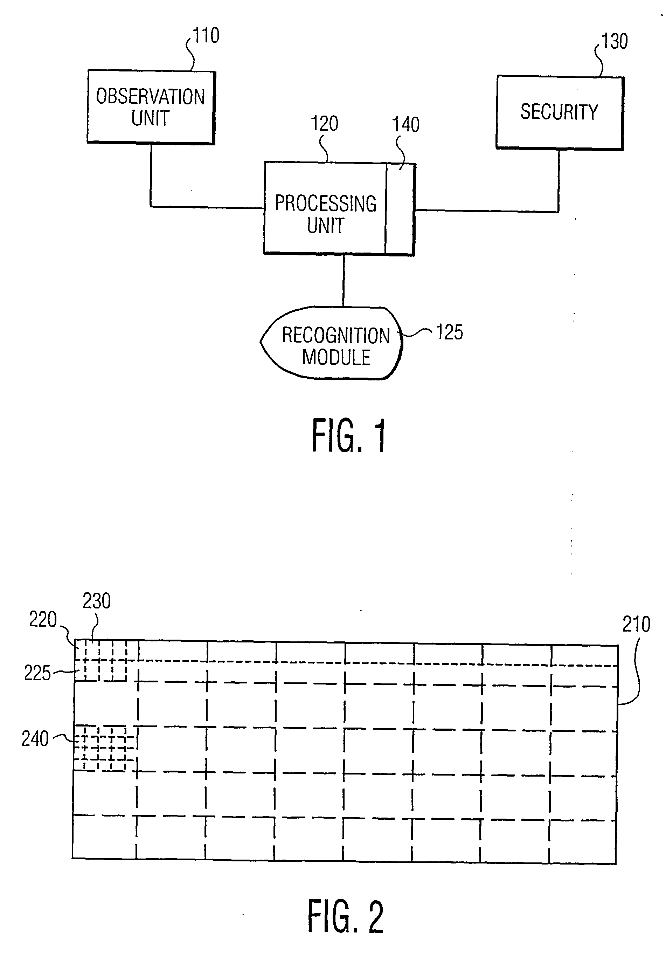

Fig. 1 is an overview of an embodiment of a system according to the preamble of the present invention. An observation unit 110 is used to keep a predetermined area under surveillance. The observation unit 110 can be a video camera, an optical sensor, an infrared sensor which senses body heat as just a few of the many possible embodiments that the observation unit can comprise. The observation unit may also have the ability to sense sounds.

The observation unit communicates with a processing unit 120, which analyzes data from the observation unit to determine with any behavior patterns observed by the observation unit are associated with predetermined suspicious behavior stored in the pattern recognition module 125.

If there is a match recognized by the pattern recognition module 125 between an observed behavior and one of the predetermined suspicious behaviors, a notifying unit 140 notifies a security site 130. The security site, upon notification that suspicious behavior has been detected, may investigate the situation further by increasing surveillance of the person committing the behavior, and or notifying security personal to approach the area under surveillance.

It should be understood that the predetermined suspicious behaviors may be innocent actions common of, for example, lawful persons, so the notification and increased surveillance should be made with the realization that there may not have been unlawful activity committed. Innocent persons may react harshly to direct confrontation as to the security system indicating that they were doing something labeled suspicious.

The behavioral patterns stored in the recognition module can include tearing sounds consistent with tearing paper packaging or breaking plastic packaging, such as when a shoplifter rips open packing to take an item (the packaging often contains the security tag).

For example, when someone in the aisle of a store tears open a box, this sound will be transmitted to the processing unit, and if the recognition module recognizes the sound as consistent with a potentially suspicious behavior (potential shoplifting) the notification unit will notify security that an individual in a particular area has been sensed as performing suspicious behavior. The security could be a person in front of a monitor, or it could be transmitted to a security guard via a portable terminal, pager, wireless communication device, etc. providing the information.

There can be severity levels associated with the detected suspicious behavior, which may be assigned to the detected behavior, and may be in conjunction with a particular area under surveillance. For example, in areas of a store where losses are higher in dollar value, such as jewelry, or in quantity of losses (which in aggregate may have a high dollar value) do, such as batteries, razors, compact discs, etc. the severity could be adjusted since the likelihood of shoplifting is greater in those areas of the store than, for example, the aisles with paper products.

Again, it should be noted that the detection of tearing sounds does not necessarily mean that something illegal has occurred, but merely that increased surveillance may be required. It would be best if, for example, a video of the aisle where the tearing sounds occurred was transmitted to security, so that someone can review whether someone is actually tearing opening packaging of an item for an illegal purposed, or merely ripping up a shopping list.

The processor means may have a storage area so that any observations which are recognized as suspicious behavior may be categorized by day, date, time, severity, etc. This would allow a security site to request the suspicious behavior "hits" for periodic review as well the real time reporting thereof.

According to an embodiment of the invention, the suspicious behavior includes recognizing when a group of people enter a store, separate in sub-groups or singles, and then leave, usually without approaching a register to purchase anything. One way the system could work would be an infrared sensor that recognizes body heat for each person entering the store.

Thus, a cluster or group of people entering the store can be identified, and the infrared sensors could monitor the difference in heat as the groups dispersed. Of course, it is not totally uncommon for a family to walk into a retail establishment and split up into different areas of interest. Accordingly, the notification of suspicious behavior should normally be handled in a subtle manner, because stopping families at the door of a store and approaching them as potential shoplifters would be bad for most businesses and would cause the loss of customers.

Other embodiment include people walking through aisles, either for a predetermined amount of time, or a predetermined number of aisles, without putting anything in the shopping cart. This type of monitoring may require a sophisticated tracking system where each patron is identified and tagged when entering the store, potentially by infrared body heat, or some other type ofbiometric sensing.

The area under surveillance could be divided into an array of cells, with each cell approximately being equal to the size of a person. The contents of each cell could be monitored and changes in the adjacent cells as a person walks through the store can be used to indicate movement. U.S. Patent 4,249,207 to Harman et al. provides background material indicating one way that an array of cells could be used to identify movement. It is understood by persons of ordinary skill in the art that there are many ways that the tracking of movement throughout the area under surveillance may be accomplished

Fig. 2 illustrates a type of pattern recognition that may be used to track, for example, whether a person is looking around constantly, a classic sign of a potential shoplifter. An indication of the turning the person's head could be determined by dividing the aisle into an array of cells 210. The array of cells could be further subdivided (shown by 220 and 225) between, for example, a height of 5 feet 5 inches and 6 feet to zone in on the level of a person's head. These values are given for explanatory purposes only, and the subdivision of cells could range from 4 feet to 8 feet for example, when seeking to detect head movement. The width of the subdivided cells also could be smaller (shown by 230), so that the turning of the head in more easily identified. There would have to be a series of movements of the head monitored to distinguish between normal browsing and looking for security.

The use of sub-divided cells could be used to detect persons carrying handbags. As shown in Fig. 2, for example, at a height approximate where a handbag normally rests (i.e. approximately two and a half feet off the ground), there may be a number of subdivisions 240 to sense a bag next to a person's side. The manipulation of the bag vertically, horizontally, or diagonally could be the basis for indicating suspicious behavior. For a shopper to be reaching into a handbag while in the aisle of a store could possibly provide an indication that wrongdoing could be occurring. Again, it is also possible that a shopper merely reached into the bag for a tissue, and this manipulation is entirely innocent.

Another criteria used to possibly determine security breaches could be to identify children and young teenagers. Teenagers are often the most likely of all groups to attempt shoplifting, and if they can be identified by the system as having a higher risk, surveillance of them may be carried out at an increased level from the moment they enter the store. One way would be by determining the height of the patron.

Of course, there are many people who are shorter than young teenagers, and there are teenagers who tower over many adults in height, so identifying one's age based on height may not work well enough. It is possible however, that cameras could scan the image of patron walking into the store and the recognition module could compare them against images of people of different ages to identify someone in a particular age group, such as a teenager. If there are, for example, two or more teenagers, the system may notify security that an increased level of surveillance might be in order.

Yet another way that people often shoplift is to wear a thick coat and stuff items underneath to escape undetected. One possible way is the system can scan the persons entering the store, and compare against images of people wearing coats, or long sleeve shirts, or t-shirts, to identify whether someone is wearing a coat. This information could be cross-referenced with the outside temperature, time of year, date, etc. For example, if it is July, and a person is identified as wearing a winter coat, this could be one ground for notifying security that increased surveillance is recommended.

The sensors do not have to be placed solely in stationary areas of the area under surveillance. For example, shopping carts could have a pressure sensing means attached to the basket so that items placed within are sensed, and the output is transmitted to the processing unit via RF. The movement of the shopping carts could be tracked according to distance, amount of time that it has been since the cart entered the store, etc.

The system may be heuristic, in that movement of persons who actually are caught performing illegal or legitimately suspicious behavior are then loaded into the recognition module for future comparisons with subsequent patrons. Thus, the pattern recognition can be heuristic, and could also be updated with new models according to need.

The transmission between the sensors, the processing unit, the recognition module and security can be made by any of fiber optic, RF, copper wires, LAN, WAN, twisted pair, etc., any type of communication system according to need. The transmission between the sensors and the process could be one type of system, and the transmission between the processor and the security could comprise something different. It is desirable that the communication to security be made in real time in an attempt to increase surveillance of, and possibly apprehend, those committing criminal acts. The security, in turn, could send messages on pagers to security guards, with the aisle where there is suspicious behavior, and possible with an image of the person.

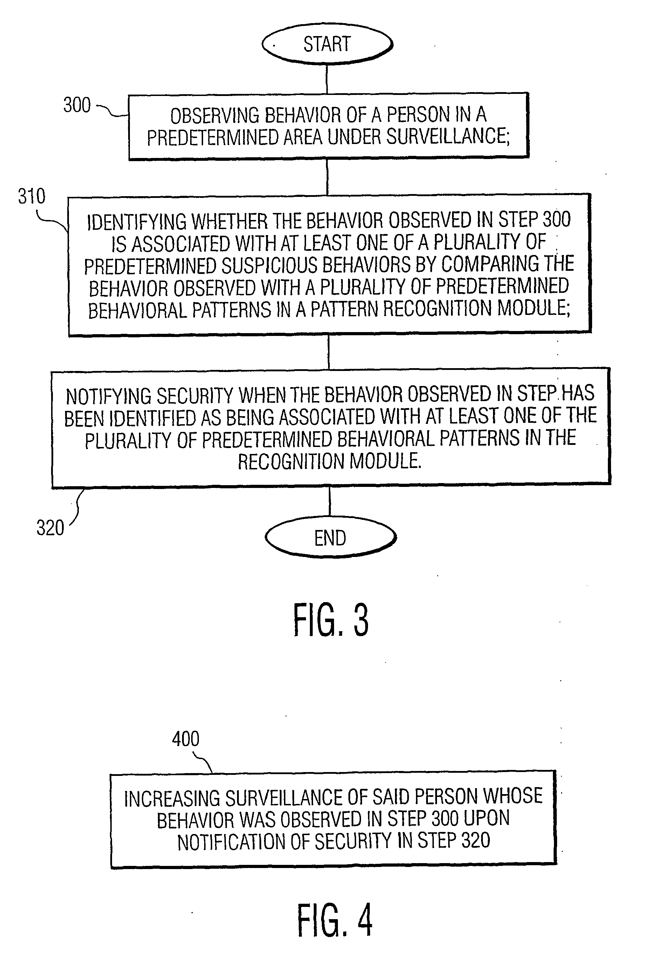

Fig. 3 provides an overview of a method according to the present invention.

At step 300, the behavior of a person in an area of surveillance is observed. In addition, the area of surveillance can include an exterior and interior of a specific location within its perimeter. For example, a certain distance outside of the doors of a store might be monitored, and when it is recognized that a person or person have been standing outside for longer than a predetermined amount of time, there could be a notification to security to increase surveillance in that area.

At step 310, there is an identification as to whether the behavior observed in step 300 is associated with at least one of a plurality of predetermined suspicious behaviors by comparing the behavior observed with a plurality of behavioral patterns in a pattern recognition module.

The plurality of the behaviors in the pattern recognition module could be images as well as motion. For example, images of teenagers could be contained in the pattern recognition module, and the images of patrons entering the store could be scanned and compared to identify whether at least one person in the group appears to over a certain age. The motion of shoppers walking through the aisles, reaching in their bags (as previously discussed) could all be criteria contained in the pattern recognition module.

At step 320, security is notified when a behavior observed is recognized by the pattern recognition module as corresponding to a pattern in storage. Based on the type of recognition, and the degree, security may not only be notified, but may also receive a severity code about the seriousness of the perceived suspicious behavior.

Fig. 4 includes an optional step 400, wherein the system may automatically increase surveillance, and not just notify a security area. For example, upon detection of suspicious behavior, the system may turn on several different cameras in that area, attempt to zoom in and focus on the person, and possibly repeat a code out loud It is not uncommon in a retail store to hear phrases like "Security, code blue" which might mean there is a problem somewhere in the store, or could mean that security is trying to scare away potential shoplifters by making them wonder if they are the reason for the alert. There could also be an automatic description of a location of the store, something identifiable to employees but not to the shoppers.

Various modifications may be made by person of ordinary skill in the art, which is within the scope of the appended claims. For example, the type of weather conditions sensed, the placement of the sensors, and the particular criteria used to increase or reduce posted speed limits can be modified.

## Claims

1. A surveillance and security system for automatic detection and warning of detected events, said system comprising:
means for observing a behavior (110) in a predetermined area under surveillance,
means for processing (120) an output of observed behavior from said means for observing, said means for processing including a pattern recognition means (125) for recognizing whether said observed behavior is associated with a predefined suspicious behavior; and
means for notifying (140) that said pattern recognition means (125) recognizes at least one behavioral pattern associated with said set of predefined suspicious behavior has been observed by said means for observing,
wherein said means for notifying (140) includes a plurality of alert codes, and
wherein said plurality of alert codes corresponds to severity level of said at least one behavioral pattern associated with said set of predefined suspicious behavior recognized by said pattern recognition means (125), and
wherein said area under surveillance includes a retail store, and said predefined suspicious behavior recognized by said pattern recognition means (125) includes recognizing a plurality of people entering the store as one group, said plurality subsequently separating into sub-groups in different portions of the store, and re-emerging as said one group when leaving the store.

2. The system according to claim 1, wherein said means for observing (110) includes cameras.

3. The system according to claim 1, wherein said means for observing (110) includes sensors.

4. The system according to claim 3, wherein said sensors sense sounds.

5. The system according to claim 1, wherein said means for notifying (140) includes warning signals communicated to a monitoring site.

6. The system according to claim 1, wherein said area under surveillance includes a retail store, and said predefined suspicious behavior recognized by said pattern recognition means (125) includes recognizing that a particular shopper has walked up and down a predetermined number of aisles without selecting an item for purchase.

7. A surveillance and security system for automatic detection and warning of detected events, said system comprising:
means for observing a behavior (110) in a predetermined area under surveillance,
means for processing (120) an output of observed behavior from said means for observing, said means for processing including a pattern recognition means (125) for recognizing whether said observed behavior is associated with a predefined suspicious behavior; and
means for notifying (140) that said pattern recognition means (125) recognizes at least one behavioral pattern associated with said set of predefined suspicious behavior has been observed by said means for observing,
wherein said means for notifying (140) includes a plurality of alert codes, and
wherein said plurality of alert codes corresponds to severity level of said at least one behavioral pattern associated with said set of predefined suspicious behavior recognized by said pattern recognition means (125), and
wherein said area under surveillance includes a retail store, and said pattern recognition means (125) further comprises recognizing that a particular shopper has walked up and down a predetermined number of aisles without selecting an item for purchase and recognizing continuous movement (220) (225) (230) of a head of the particular shopper for a predetermined amount of time.

8. The system according to claim 7, wherein said pattern recognition means (125) further comprises recognizing that said particular shopper has spent a predetermined amount of time in the store without selecting an item for purchase.

9. A surveillance and security system for automatic detection and warning of detected events, said system comprising:
means for observing a behavior (110) in a predetermined area under surveillance,
means for processing (120) an output of observed behavior from said means for observing, said means for processing including a pattern recognition means (125) for recognizing whether said observed behavior is associated with a predefined suspicious behavior; and
means for notifying (140) that said pattern recognition means (125) recognizes at least one behavioral pattern associated with said set of predefined suspicious behavior has been observed by said means for observing,
wherein said means for notifying (140) includes a plurality of alert codes, and
wherein said plurality of alert codes corresponds to severity level of said at least one behavioral pattern associated with said set of predefined suspicious behavior recognized by said pattern recognition means (125), and
wherein said area under surveillance includes a retail store, and said pattern recognition means (125) further comprises recognizing that a particular shopper is wearing a coat when an outside temperature is greater than a predetermined value.

10. The system according to claim 9, wherein said pattern recognition further comprises recognizing that said particular shopper is carrying a bag.

11. The system according to claim 1, wherein said area under surveillance includes a retail store and a predetermined area outside of said store, and said pattern recognition means (125) recognizing when a person is in the predetermined area outside of said store for a predetermined amount of time.

12. A method for surveillance and detection of suspicious behavior, said method comprising the steps of:
(a) observing behavior of a person in a predetermined area under surveillance (300);
(b) identifying whether the behavior observed in step (a) is associated with at least one of a plurality of predetermined suspicious behaviors by comparing the behavior observed with a plurality of predetermined behavioral patterns in a pattern recognition module (310);
(c) notifying security when the behavior observed has been identified as being associated with at least one of the plurality of predetermined behavioral patterns in the recognition module (320),
wherein step (c) is **characterized in that** said security is also receiving a severity code about a seriousness of said behavior observed, and
wherein said area under surveillance includes a retail store, and said predefined suspicious behavior recognized by said pattern recognition means (125) includes recognizing a plurality of people entering the store as one group, said plurality subsequently separating into sub-groups in different portions of the store, and re-emerging as said one group when leaving the store.

13. A method for surveillance and detection of suspicious behavior, said method comprising the steps of:
(a) observing behavior of a person in a predetermined area under surveillance (300);
(b) identifying whether the behavior observed in step (a) is associated with at least one of a plurality of predetermined suspicious behaviors by comparing the behavior observed with a plurality of predetermined behavioral patterns in a pattern recognition module (310);
(c) notifying security when the behavior observed has been identified as being associated with at least one of the plurality of predetermined behavioral patterns in the recognition module (320),
wherein step (c) is **characterized in that** said security is also receiving a severity code about a seriousness of said behavior observed, and
wherein said area under surveillance includes a retail store, and said pattern recognition means (125) further comprises recognizing that a particular shopper has walked up and down a predetermined number of aisles without selecting an item for purchase and recognizing continuous movement (220) (225) (230) of a head of the particular shopper for a predetermined amount of time.

14. A method for surveillance and detection of suspicious behavior, said method comprising the steps of:
(a) observing behavior of a person in a predetermined area under surveillance (300);
(b) identifying whether the behavior observed in step (a) is associated with at least one of a plurality of predetermined suspicious behaviors by comparing the behavior observed with a plurality of predetermined behavioral patterns in a pattern recognition module (310);
(c) notifying security when the behavior observed has been identified as being associated with at least one of the plurality of predetermined behavioral patterns in the recognition module (320),
wherein step (c) is **characterized in that** said security is also receiving a severity code about a seriousness of said behavior observed, and
wherein said area under surveillance includes a retail store, and said pattern recognition means (125) further comprises recognizing that a particular shopper is wearing a coat when an outside temperature is greater than a predetermined value.

15. The method according to claim 12, further comprising: (d) increasing surveillance of said person whose behavior was observed in step (a) upon notification of security in step (c).

16. The method according to claim 12, wherein the area under surveillance comprises an interior portion and an exterior portion of a store, and wherein one of the predetermined behavioral patterns in said pattern recognition module includes recognizing when a particular person has been in the exterior portion of the store for a predetermined amount of time.

## Patentansprüche

1. Überwachungs- und Sicherheitssystem zur automatischen Detektion und Warnung von detektierten Ereignissen, wobei dieses System die nachfolgenden Mittel umfasst:
- Mittel zum Beobachten eines Verhaltens (110) in einem vorbestimmten überwachten Gebiet,
- Mittel zum Verarbeiten (120) eines Ausgangssignals von beobachtetem Verhalten aus den Beobachtungsmitteln, wobei die genannten Mittel zum Verarbeiten ein Mustererkennungsmittel (125) aufweisen um zu erkennen, ob das beobachtete Verhalten mit einem vordefinierten verdächtigen Verhalten assoziiert ist, und
- Mittel um zu melden (140), dass die genannten Mustererkennungsmittel (125) wenigstens ein Verhaltensmuster erkennen, dass mit dem genannten Satz vordefinierten verdächtigten Verhaltens von den genannten Beobachtungsmitteln beobachtet worden ist,
wobei die genannten Mittel zum Melden (140) eine Anzahl Alarmcodes umfassen, und
wobei die genannte Anzahl Alarmcodes einem Sicherheitspegel des genannten wenigstens einen Verhaltensmusters entsprechen, das mit dem genannten Satz vordefinierten verdächtigten Verhaltens assoziiert ist, das von den genannten Mustererkennungsmitteln (125) erkannt worden ist, und
wobei das genannte überwachte Gebiet einen Handelsladen umfasst, und das genannte vordefinierte verdächtigte Verhalten, das von den genannten Mustererkennungsmitteln (125) erkannt worden ist, das Erkennen einer Anzahl Personen, die in den Laden eintreten als eine Gruppe umfasst, wobei diese Anzahl danach in Subgruppen in verschiedenen Teilen des Ladens voneinander getrennt wird, und beim Verlassen des Ladens wieder zu einer Gruppe zusammengefügt wird.

2. System nach Anspruch 1, wobei die genannten Beobachtungsmittel (110) Kameras umfassen.

3. System nach Anspruch 1, wobei die genannten Beobachtungsmittel (110) Sensoren umfassen.

4. System nach Anspruch 3, wobei die genannten Sensoren Schall spüren.

5. System nach Anspruch 1, wobei die genannten Meldemittel (140) Warnsignale umfassen, die einer Überwachungsstelle zugeführt werden.

6. System nach Anspruch 1, wobei das genannte überwachte Gebiet einen Laden umfasst und das genannte von den genannten Mustererkennungsmitteln (125) erkannte vordefinierte verdächtigte Verhalten das Erkennen umfasst, dass ein bestimmter Kunde eine vorbestimmte Anzahl Gänge auf und ab gegangen ist, ohne dass er etwas zum Kaufen gewählt hat.

7. Überwachungs- und Sicherheitssystem zur automatischen Detektion und Warnung detektierter Ereignisse, wobei dieses System die nachfolgenden Mittel umfasst:
- Mittel zum Beobachten eines Verhaltens (110) in einem vorbestimmten überwachten gebiet,
- Mittel zum Verarbeiten (120) eines Ausgangssignals beobachteten Verhaltens aus den genannten Beobachtungsmitteln, wobei die genannten Verarbeitungsmittel ein Mustererkennungsmittel (125) umfassen um zu erkennen, ob das genannte beobachtete Verhalten mit einem vordefinierten verdächtigten Verhalten assoziiert ist; und
- Mittel um zu melden (140), dass die genannten Mustererkennungsmittel (125) wenigstens ein Verhaltensmuster erkennen, das mit dem genannten Satz vordefinierten verdächtigten Verhaltens assoziiert ist, das von den genannten Beobachtungsmitteln beobachtet worden ist,
wobei die genannten Meldemittel (140) eine Anzahl Alarmcodes umfassen, und
wobei die genannte Anzahl Alarmcodes dem Sicherheitspegel des genannten wenigstens einen Verhaltensmusters entsprechen, das mit dem genannten Satz vordefinierten verdächtigten Verhaltens assoziiert ist, das von den genannten Mustererkennungsmitteln (125) erkannt worden ist, und
wobei das genannte überwachte Gebiet einen Laden umfasst, und die genannten Mustererkennungsmittel (125) weiterhin das Erkennen, dass ein bestimmter Kunde eine Anzahl Gänge auf und ab gegangen ist, ohne dass er etwas zum Kaufen gewählt hat, umfasst, und das Erkennen einer kontinuierlichen Bewegung (220) (225) (230) des Kopfes des betreffenden Kunden während einer bestimmten Zeit.

8. System nach Anspruch 7, wobei die genannten Mustererkennungsmittel (125) weiterhin umfasst: das Erkennen, dass der genannte betreffende Kunde eine vorbestimmte Zeitdauer in dem Laden verbringt, ohne dass er etwas zum Kaufen gewählt hat.

9. Überwachungs- und Sicherheitssystem zur automatischen Detektion und Warnung detektierter Ereignisse, wobei das genannte System die nachfolgenden Mittel umfasst:
- Mittel zum Beobachten eines Verhaltens (110) in einem bestimmten beobachteten Gebiet,
- Mittel zum Verarbeiten (120) eines Ausgangssignals des beobachteten Verhaltens aus den genannten Beobachtungsmitteln, wobei die genannten Verarbeitungsmittel ein Mustererkennungsmittel (125) aufweisen um zu erkennen, ob das genannte beobachtete Verhalten mit einem vordefinierten verdächtigten Verhalten assoziiert ist; und
- Mittel um zu melden (140), dass die genannten Mustererkennungsmittel (125) wenigstens ein Verhaltensmuster erkennen, das mit dem genannten Satz vordefinierten verdächtigten Verhaltens assoziiert ist, das von den genannten Beobachtungsmitteln beobachtet worden ist,
wobei die genannten Meldemittel (140) eine Anzahl Alarmcodes aufweisen, und
wobei die genannte Anzahl Alarmcodes dem Sicherheitspegel des genannten wenigstens einen Verhaltensmusters entsprechen, das mit dem genannten Satz vordefinierten verdächtigten Verhaltens assoziiert ist, das von den genannten Mustererkennungsmitteln (125) erkannt worden ist, und
wobei das genannte überwachte Gebiet einen Laden umfasst, und die genannten Mustererkennungsmittel (125) weiterhin Folgendes umfassen: das Erkennen, dass ein bestimmter Kunde einen Mantel trägt, wenn die Außentemperatur höher ist als ein vorbestimmter Wert.

10. System nach Anspruch 9, wobei die genannte Mustererkennung weiterhin Folgendes umfasst: das Erkennen, dass der genannte betreffende Kunde eine Tasche trägt.

11. System nach Anspruch 1, wobei das genannte überwachte Gebiet einen Laden umfasst und ein vorbestimmtes Gebiet außerhalb des genannten Ladens, und die genannten Mustererkennungsmittel (125) erkennen, wenn eine Person sich während einer vorbestimmten Zeitdauer in dem vorbestimmten Gebiet außerhalb des genannten Ladens aufhält.

12. Verfahren zur Überwachung und Detektion eines verdächtigten Verhaltens, wobei das genannte Verfahren die nachfolgenden Verfahrensschritte umfasst:
(a) das Beobachten des Verhaltens einer Person in einem vorbestimmten überwachten Gebiet (300);
(b) das Identifizieren, ob das in dem Schritt (a) beobachtete Verhalten mit wenigstens einem Verhalten einer Anzahl vorbestimmten verdächtigten Verhalten assoziiert ist, und zwar durch einen Vergleich des beobachteten Verhaltens mit einer Anzahl vorbestimmter Verhaltensmuster in einem Mustererkennungsmodul (310);
(c) das Melden des Sicherheitsdienstes, wenn das beobachtete Verhalten als mit wenigstens einem Verhalten der Anzahl vorbestimmter verdächtigter Verhaltensmuster in dem Erkennungsmodul (320) assoziiert ist.
wobei der Schritt (c) **dadurch gekennzeichnet ist, dass** der genannte Sicherheitsdienst ebenfalls einen Gewichtungscode über die Ernsthaftigkeit des beobachteten Verhaltens empfängt, und
wobei das genannte überwachte Gebiet einen Laden umfasst und das genannte vordefinierte verdächtigte Verhalten, das von den genannten Mustererkennungsmitteln (125) erkannt worden ist, Folgendes umfasst: das Erkennen einer Anzahl Personen, die in den Laden eintreten, als eine Gruppe, wobei die genannte Anzahl daraufhin in Subgruppen in verschiedenen Teilen des Ladens getrennt werden, und beim Verlassen des Ladens als die genannte eine Gruppe zusammengefügt werden.

13. Verfahren zur Überwachung und Detektion von verdächtigtem Verhalten, wobei das genannte Verfahren die nachfolgenden Verfahrensschritte umfasst:
(a) das Beobachten des Verhaltens einer Person in einem vorbestimmten überwachten Gebiet (300);
(b) das Identifizieren, ob das in dem Schritt (a) beobachtete Verhalten mit wenigstens einem Verhalten einer Anzahl vorbestimmter verdächtigter Verhalten assoziiert ist, durch einen Vergleich des beobachteten Verhaltens mit einer Anzahl vorbestimmter Verhaltensmuster in einem Mustererkennungsmodul (310);
(c) das Benachrichtigen des Sicherheitsdienstes, wenn das beobachtete Verhalten als mit wenigstens einem Muster der Anzahl vorbestimmter Verhaltensmuster in dem Erkennungsmodul (320) assoziiert, identifiziert worden ist,
wobei der Schritt (c) **dadurch gekennzeichnet ist, dass** der genannte Sicherheitsdienst ebenfalls einen Gewichtungscode über die Ernsthaftigkeit des genannten beobachteten Verhaltens empfängt, und
wobei das genannte überwachte Gebiet einen Laden umfasst, und die genannten Mustererkennungsmittel (125) weiterhin Folgendes umfassen: das Erkennen, dass ein bestimmter Kunde eine vorbestimmte Anzahl Gänge auf und ab gegangen ist, ohne dass er etwas zum Kaufen gewählt hat, und das Erkennen einer ständigen Bewegung (220) (225) (230) des Kopfes des betreffenden Kunden während einer vorbestimmten Zeit.

14. Verfahren zum Überwachen und Detektieren von verdächtigem Verhalten, wobei das genannte Verfahren die nachfolgenden Verfahrensschritte umfasst:
(a) Beobachtung des Verhaltens einer Person in einem vorbestimmten überwachten Gebiet (300);
(b) Identifikation, ob das in den Schritt (a) beobachtete Verhalten mit wenigstens einem Verhalten einer Anzahl vorbestimmter verdächtigter Verhalten assoziiert ist, durch einen Vergleich des beobachteten Verhaltens mit einer Anzahl vorbestimmter Verhaltensmuster in einem Mustererkennungsmodul (310);
(c) Benachrichtigung des Sicherheitsdienstes, wenn das beobachtete Verhalten als mit wenigstens einem Muster der Anzahl vorbestimmter Verhaltensmuster in dem Erkennungsmodul (320) assoziiert, identifiziert worden ist,
wobei der Schritt (c) **dadurch gekennzeichnet ist, dass** der genannte Sicherheitsdienst ebenfalls einen Gewichtungscode über die Ernsthaftigkeit des genannten beobachteten Verhaltens empfängt, und
wobei das genannte überwachte Gebiet einen Laden umfasst, und die genannten Mustererkennungsmittel (125) weiterhin Folgendes umfassen: Erkennung, dass ein bestimmter Kunde, der einen Mantel trägt, wenn die Außentemperatur höher ist als ein vorbestimmter Wert.

15. Verfahren nach Anspruch 12, wobei das Verfahren weiterhin Folgendes umfasst:
(d) Steigerung der Überwachung der genannten Person, deren Verhalten in dem Schritt (a) beobachtet wurde unter Benachrichtigung des Sicherheitsdienstes im Schritt (c).

16. Verfahren nach Anspruch 12, wobei das überwachte Gebiet einen Innenteil und einen Außenteil des Ladens umfasst, und wobei eines der vorbestimmten Verhaltensmuster in dem genannten Mustererkennungsmodul Folgendes umfasst: das Erkennen, wenn eine bestimmte Person sich während einer vorbestimmten Zeitperiode in dem externen Teil des Ladens befindet.

## Revendications

1. Système de surveillance et de sécurité pour la détection automatique et l'avertissement d'évènements détectés, ledit système comprenant:
un moyen d'observation (110) destiné à observer un comportement dans une zone prédéterminée sous surveillance,
un moyen de traitement (120) destiné à traiter un signal de sortie de comportement observé émanant dudit moyen d'observation, ledit moyen de traitement comprenant un moyen de reconnaissance de motifs (125) destiné à reconnaître si ledit comportement observé est associé à un comportement suspect prédéfini; et
un moyen de notification (140) destiné à notifier que ledit moyen de reconnaissance de motifs (125) reconnaît qu'au moins un motif de comportement associé audit jeu de comportements suspects prédéfinis a été observé par ledit moyen d'observation,
dans lequel ledit moyen de notification (140) comprend une pluralité de codes d'alerte, et
dans lequel ladite pluralité de codes d'alerte correspond à des niveaux de sévérité dudit au moins un motif de comportement associé audit jeu de comportements suspects prédéfinis, reconnu par ledit moyen de reconnaissance de motifs (125), et
dans lequel ladite zone sous surveillance comprend un magasin de détail, et ledit comportement suspect prédéfini reconnu par ledit moyen de reconnaissance de motifs (125) comprend la reconnaissance d'une pluralité de personnes entrant dans le magasin comme un groupe, lesdites personnes se séparant ensuite en sous-groupes dans différentes parties du magasin, et réapparaissant sous la forme dudit groupe lorsqu'elles sortent du magasin.

2. Système suivant la revendication 1, dans lequel ledit moyen d'observation (110) comprend des caméras.

3. Système suivant la revendication 1, dans lequel ledit moyen d'observation (110) comprend des capteurs.

4. Système suivant la revendication 3, dans lequel lesdits capteurs détectent des sons.

5. Système suivant la revendication 1, dans lequel ledit dispositif de notification (140) comprend des signaux d'avertissement communiqués à un site de surveillance.

6. Système suivant la revendication 1, dans lequel ladite zone sous surveillance comprend un magasin de détail, et ledit comportement suspect prédéfini reconnu par ledit moyen de reconnaissance de motifs (125) comprend la reconnaissance du fait qu'un client particulier a parcouru un nombre prédéterminé d'allées du magasin sans sélectionner d'article à acheter.

7. Système de surveillance et de sécurité pour la détection automatique et l'avertissement d'évènements détectés, ledit système comprenant:
un moyen d'observation (110) destiné à observer un comportement dans une zone prédéterminée sous surveillance,
un moyen de traitement (120) destiné à traiter un signal de sortie d'un comportement observé émanant dudit moyen d'observation, ledit moyen de traitement comprenant un moyen de reconnaissance de motifs (125) destiné à reconnaître si ledit comportement observé est associé à un comportement suspect prédéfini; et
un moyen de notification (140) destiné à notifier que ledit moyen de reconnaissance de motifs (125) reconnaît qu'au moins un motif comportemental associé audit jeu de comportements suspects prédéfinis a été observé par ledit moyen d'observation,
dans lequel ledit moyen de notification (140) comprend une pluralité de codes d'alerte, et
dans lequel ladite pluralité de codes d'alerte correspond à des niveaux de sévérité dudit au moins un motif comportemental associé audit jeu de comportements suspects prédéfinis reconnus par ledit moyen de reconnaissance de motifs (125), et
dans lequel ladite zone sous surveillance comprend un magasin de détail, et ledit moyen de reconnaissance de motifs (125) comprend en outre la reconnaissance du fait qu'un client particulier a parcouru un nombre prédéterminé d'allées du magasin sans sélectionner d'article à acheter et la reconnaissance de mouvements continus (220) (225) (230) de la tête du client particulier pendant une période de temps prédéterminée.

8. Système suivant la revendication 7, dans lequel ledit moyen de reconnaissance de motifs (125) comprend en outre la reconnaissance du fait que ledit client particulier a passé un laps de temps d'une durée prédéterminée dans le magasin sans sélectionner d'article à acheter.

9. Système de surveillance et de sécurité pour la détection automatique et l'avertissement d'évènements détectés, ledit système comprenant:
un moyen d'observation (110) destiné à observer un comportement dans une zone prédéterminée sous surveillance,
un moyen de traitement (120) destiné à traiter un signal de sortie d'un comportement observé émanant dudit moyen d'observation, ledit moyen de traitement comprenant un moyen de reconnaissance de motifs (125) destiné à reconnaître si ledit comportement observé est associé à un comportement suspect prédéfini; et
un moyen de notification (140) destiné à notifier que ledit moyen de reconnaissance de motifs (125) reconnaît qu'au moins un motif comportemental associé audit jeu de comportements suspects prédéfinis a été observé par ledit moyen d'observation,
dans lequel ledit moyen de notification (140) comprend une pluralité de codes d'alerte, et
dans lequel ladite pluralité de codes d'alerte correspond au niveau de sévérité dudit au moins un motif comportemental associé audit jeu de comportements suspects prédéfinis reconnus par ledit moyen de reconnaissance de motifs (125), et
dans lequel ladite zone sous surveillance comprend un magasin de détail, et ledit moyen de reconnaissance de motifs (125) comprend en outre la reconnaissance du fait qu'un client particulier porte un manteau alors que la température extérieure est supérieure à une valeur prédéterminée.

10. Système suivant la revendication 9, dans lequel ladite reconnaissance de motifs comprend en outre la reconnaissance du fait que ledit client particulier porte un sac.

11. Système suivant la revendication 1, dans lequel ladite zone sous surveillance comprend un magasin de détail et une zone prédéterminée située à l'extérieur du magasin, et ledit moyen de reconnaissance de motifs (125) reconnaît le fait qu'une personne se trouve dans la zone prédéterminée à l'extérieur dudit magasin pendant un laps de temps prédéterminé.

12. Procédé pour la surveillance et la détection de comportements suspects, ledit procédé comprenant les étapes suivantes:
(a) observer le comportement d'une personne dans une zone prédéterminée sous surveillance (300);
(b) identifier si le comportement observé dans l'étape (a) est associé à au moins l'un d'une pluralité de comportements suspects prédéterminés en comparant le comportement observé avec une pluralité de motifs comportementaux prédéterminés dans un module de reconnaissance de motifs (310);
(c) notifier à la sécurité lorsque le comportement observé a été identifié comme étant associé à au moins l'un de la pluralité de motifs comportementaux prédéterminés dans le module de reconnaissance (320),
dans lequel l'étape (c) est **caractérisée en ce que** ladite sécurité reçoit également un code de sévérité portant sur la gravité du comportement observé, et
dans lequel ladite zone sous surveillance comprend un magasin de détail, et ledit comportement suspect prédéfini reconnu par ledit moyen de reconnaissance de motifs (125) comprend la reconnaissance d'une pluralité de personnes entrant dans le magasin sous la forme d'un groupe, lesdites personnes de la pluralité se séparant ensuite en sous-groupes dans différentes parties du magasin, et réapparaissant sous la forme dudit groupe lorsqu'elles sortent du magasin.

13. Procédé pour la surveillance et la détection de comportements suspects, ledit procédé comprenant les étapes suivantes:
(a) observer le comportement d'une personne dans une zone prédéterminée sous surveillance (300);
(b) identifier si le comportement observé dans l'étape (a) est associé à au moins l'un d'une pluralité de comportements suspects prédéterminés en comparant le comportement observé avec une pluralité de motifs comportementaux prédéterminés dans un module de reconnaissance de motifs (310);
(c) notifier à la sécurité lorsque le comportement observé a été identifié comme étant associé à au moins l'un de la pluralité de motifs comportementaux prédéterminés dans le module de reconnaissance (320),
dans lequel l'étape (c) est **caractérisée en ce que** ladite sécurité reçoit également un code de sévérité portant sur la gravité du comportement observé, et
dans lequel ladite zone sous surveillance comprend un magasin de détail, et ledit moyen de reconnaissance de motifs (125) comprend en outre la reconnaissance du fait qu'un client particulier a parcouru un nombre prédéterminé d'allées du magasin sans sélectionner d'article à acheter et la reconnaissance de mouvements continus (220) (225) (230) d'une tête du client particulier pendant un laps de temps prédéterminé.

14. Procédé pour la surveillance et la détection de comportements suspects, ledit procédé comprenant les étapes suivantes:
(a) observer le comportement d'une personne dans une zone prédéterminée sous surveillance (300);
(b) identifier si le comportement observé dans l'étape (a) est associé à au moins l'un d'une pluralité de comportements suspects prédéterminés en comparant le comportement observé avec une pluralité de motifs comportementaux prédéterminés dans un module de reconnaissance de motifs (310);
(c) notifier à la sécurité lorsque le comportement observé a été identifié comme étant associé à au moins l'un de la pluralité de motifs comportementaux prédéterminés dans le module de reconnaissance (320),
dans lequel l'étape (c) est **caractérisée en ce que** ladite sécurité reçoit également un code de sévérité portant sur la gravité du comportement observé, et
dans lequel ladite zone sous surveillance comprend un magasin de détail, et ledit moyen de reconnaissance de motifs (125) comprend en outre la reconnaissance du fait qu'un client particulier porte un manteau alors que la température extérieure est supérieure à une valeur prédéterminée.

15. Procédé suivant la revendication 12, comprenant en outre: d) l'augmentation de la surveillance de ladite personne dont le comportement a été observé dans l'étape (a) après notification à la sécurité dans l'étape (c).

16. Procédé suivant la revendication 12, dans lequel la zone sous surveillance comprend une partie intérieure et une partie extérieure d'un magasin, et dans lequel l'un des motifs comportementaux prédéterminés dans ledit module de reconnaissance de motifs comprend la reconnaissance du fait qu'une personne est restée dans la partie extérieure du magasin pendant un laps de temps prédéterminé.
